(19) Europäisches Patentamt
European Patent Office
Office européen des brevets

(11) EP 1 155 929 B1

(12) **FASCICULE DE BREVET EUROPEEN**

(45) Date de publication et mention de la délivrance du brevet:
**29.09.2004 Bulletin 2004/40**

(51) Int Cl.$^{7}$: **B60R 25/00**, E05B 49/00

(21) Numéro de dépôt: **01401264.5**

(22) Date de dépôt: **16.05.2001**

(54) **Système électronique de sécurité pour véhicule**

Elektronisches Sicherheitssystem für Fahrzeuge

Electronic security system for a vehicle

(84) Etats contractants désignés:
**DE ES FR GB IT**

(30) Priorité: **18.05.2000 FR 0006348**

(43) Date de publication de la demande:
**21.11.2001 Bulletin 2001/47**

(73) Titulaire: **VALEO SECURITE HABITACLE S.A.S.**
**94042 Créteil Cédex (FR)**

(72) Inventeur: **Morillon, Jacques**
**91300 Massy (FR)**

(74) Mandataire: **Rosolen-Delarue, Katell**
**Valeo Securité Habitacle,**
**Service Propriété Industrielle,**
**42, rue Le Corbusier - Europarc**
**94042 Creteil Cedex (FR)**

(56) Documents cités:
**EP-A- 0 521 547**
**EP-A- 0 992 408**

EP 1 155 929 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

L'invention est relative à un système électronique de sécurité, pour véhicule, du genre comprenant des moyens d'identification situés dans le véhicule, et un identifiant porté par un utilisateur, les moyens d'identification procédant à des interrogations périodiques dans des fenêtres de durée déterminée, par émission de signaux électromagnétiques à radiofréquence (RF) codés, en vue d'obtenir une réponse de l'identifiant pour son authentification, le système assurant le déverrouillage du véhicule lorsque l'authentification est réalisée, tandis que dans le cas contraire le véhicule est verrouillé.

Un tel système peut commander, par exemple, le verrouillage et le déverrouillage des portes et ouvrants du véhicule, ainsi qu'un dispositif antidémarrage codé, ou tout autre dispositif permettant d'empêcher l'utilisation du véhicule par une personne non autorisée.

L'identifiant peut être constitué par un identifiant ou un porte-clés muni, par exemple, d'un transpondeur électromagnétique qui, en réponse à un signal d'interrogation, émet un signal codé pour les moyens d'identification.

Le véhicule émet régulièrement le code par une antenne, par exemple une antenne placée au niveau d'une poignée de porte.

Si l'identifiant approprié, qui reçoit le code, renvoie sur l'antenne du véhicule une information convenable, le véhicule reste déverrouillé s'il l'était ou se déverrouille s'il était verrouillé. En revanche, si les moyens d'identification du véhicule ne reçoivent pas l'information convenable, cela veut dire que l'identifiant n'est plus à proximité du véhicule ; le système commande alors le verrouillage du véhicule si ce dernier est déverrouillé, ou maintient le véhicule verrouillé s'il se trouve dans cet état.

Les interrogations périodiques envoyées depuis le véhicule par les moyens d'identification s'effectuent, par exemple, toutes les secondes ; l'interrogation et la réponse ont lieu, par exemple, dans un créneau de 50 ms (50 millisecondes) positionné au début d'une fenêtre ou période d'interrogation de 1s (1 seconde).

Pour la séquence émission/réception normale de la conversation véhicule/identifiant sur un créneau de 50 ms toutes les secondes, on réserve environ 30 ms (30 millisecondes) pour une émission à 4Kb (kilobits) puis 20 ms pour une réception à 10Kb. L'émission se fait typiquement à une puissance de 10 mW.

Des difficultés surgissent lorsque se trouvent, dans une même zone, plusieurs véhicules, par exemple un véhicule V1, avec identifiant I1, et un véhicule V2 avec identifiant I2. Comme les transmissions en radiofréquence ont lieu sur un canal donné, les émissions du véhicule V2 peuvent perturber la réception du véhicule V1, même si l'identifiant I1 est à proximité du véhicule V1. Lorsque V1 interroge pour savoir si I1 est au voisinage, I1 répond, mais en raison du bruit créé par V2 ou I2, V1 ne reçoit plus le code approprié et en déduit que I1 n'est plus au voisinage de sorte que les moyens d'identification de V1 risquent de commander le verrouillage ou le maintien du verrouillage de V1. En d'autres termes, entre les deux véhicules V1, V2, il risque d'y avoir un conflit ou collision entre les deux systèmes de sécurité.

Au demeurant, même pour un véhicule V1 pris isolément, un problème de collision peut se présenter entre plusieurs codes envoyés par radiofréquence. En effet, le véhicule V1 peut comporter des systèmes internes qui émettent périodiquement, mais en permanence, une information sur le même canal de radiofréquence, par exemple pour fournir une information relative au niveau de carburant. Dans ce cas, les propres systèmes du véhicule V1 peuvent entrer en collision avec l'émission/réception de verrouillage/déverrouillage. Les systèmes électroniques de sécurité selon les préambules des revendications 1 et 2 sont connus dans l'état de la technique.

On a déjà proposé que l'interrogation émise par les moyens d'identification du véhicule soit faite de façon redondante, c'est-à-dire répétée, dans chaque fenêtre d'interrogation pour être sûr de l'information acquise en réponse. Dans ce cas, l'échange V1/I1 occupe davantage de créneaux de temps dans une fenêtre d'interrogation, sur le canal de radiofréquence, de sorte que les risques de collision de plusieurs systèmes sont augmentés.

L'invention a pour but, surtout, de fournir un système électronique de sécurité pour véhicule qui permette d'éviter ou tout au moins de réduire considérablement, les collisions radiofréquence évoquées ci-dessus. Il est souhaitable en outre que le système soit d'un prix de revient acceptable et que son utilisation reste simple et corresponde à un système mains libres d'ouverture et de commande d'antidémarrage codé.

Selon un premier aspect de l'invention, un système électronique de sécurité pour véhicule, du genre défini précédemment, est caractérisé par le fait que les moyens d'identification émettent, au cours d'une fenêtre d'interrogation, dans un créneau primaire un code complet suffisamment long pour permettre l'authentification de l'identifiant et, qu'en l'absence d'une réponse satisfaisante, les moyens d'identification émettent ensuite, dans des créneaux secondaires successifs, un code abrégé de longueur inférieure à celle du code complet, ce code abrégé étant suffisant pour établir, en cas de réponse, une présence de l'identifiant mais insuffisant pour assurer une authentification qui est ensuite réalisée par une nouvelle émission du code complet.

Selon un autre aspect de l'invention, le système électronique de sécurité pour véhicule est caractérisé par le fait que les moyens d'identification émettent à un moment fixe, dans des créneaux primaires successifs, un code abrégé suffisant pour établir une présence de l'identifiant mais insuffisant pour assurer une authentification complète, et en cas de réponse au code abrégé, les moyens d'identification émettent un code long dans un créneau secondaire pour l'authentification.

L'utilisation d'un code abrégé réduit les risques de collision.

Les moyens d'identification peuvent comprendre un module de contrôle et un module radio, communiquant avec le module de contrôle, propre à assurer l'émission de signaux vers l'identifiant et la réception de signaux provenant de l'identifiant.

Avantageusement le code complet ou code long, permettant une authentification est découpé en n parties et le code abrégé est formé par la $p^{ième}$ partie avec indication de la valeur du chiffre p.

Le code abrégé peut comporter un nombre de bits compris entre 2 et 30.

Le début du code abrégé, dans chaque créneau secondaire, peut être positionné de manière aléatoire. De préférence, le début du code abrégé est positionné en fonction du code.

Le nombre de codes abrégés émis, à l'intérieur d'une fenêtre, dans des créneaux successifs est choisi suffisamment grand pour que la probabilité de collision entre plusieurs systèmes soit inférieure à une valeur déterminée. Ce nombre de codes abrégés est avantageusement compris entre 5 et 15, bornes incluses, en particulier égal à, ou voisin de, 10 par fenêtre d'interrogation.

Le système est avantageusement prévu pour que, lorsqu'une présence est détectée à proximité du véhicule par un détecteur de présence, les moyens d'identification émettent k fois le code long sur k créneaux, tandis que lorsqu'aucune présence n'est détectée à proximité du véhicule, les moyens d'identification émettent en premier un code long qui, en l'absence de réponse, est suivi par un silence d'une durée égale à au moins k fois la durée du créneau pour un code long.

Dans le cas où une collision s'est produite et a entraîné l'émission de codes abrégés, par au moins deux systèmes entrés en collision, dans des créneaux secondaires synchrones, après réception d'une réponse à un code abrégé le système émet pour l'authentification un code long dont le début est positionné, relativement au début de son créneau primaire, en fonction de la position, dans le créneau secondaire, du code abrégé ayant entraîné une réponse.

De préférence, les décalages des débuts de code long par rapport à la fin du créneau secondaire où il y a eu une réponse sont choisis de telle sorte qu'une distance suffisante existe entre les débuts des deux codes longs pour éviter toute collision, cette distance étant de préférence supérieure à la longueur en millisecondes du créneau du code long. En particulier, la distance exprimée en millisecondes est supérieure d'au moins 5 ms à la durée du créneau du code long.

Dans le cas où les créneaux secondaires ne sont pas synchrones, le système qui a émis un code long le premier et qui a constaté une absence de réponse, et donc l'existence d'une collision, est prévu pour envoyer un signal de synchronisation avant de passer en code abrégé, ce signal de synchronisation étant envoyé après un intervalle de temps, qui suit la fin du code long dont on a constaté la mise en collision, supérieur à la durée du créneau du code long.

L'invention consiste, mises à part les dispositions exposées ci-dessus, en un certain nombre d'autres dispositions dont il sera plus explicitement question ci-après à propos d'exemples décrits avec référence aux dessins ci-annexés, mais qui ne sont nullement limitatifs.

La figure 1 représente schématiquement deux véhicules à système de sécurité, du type mains libres, d'ouverture et de commande d'antidémarrage codé.

La figure 2 est un chronogramme d'interrogation d'un identifiant.

La figure 3 est un chronogramme d'identification, dans le cas normal.

La figure 4 est un chronogramme d'identification pour déverrouillage véhicule en mode mains libres en cas d'erreurs, avec code abrégé.

La figure 5 est un chronogramme du verrouillage en mode mains libres.

La figure 6 est un chronogramme de dix interrogations courtes de 20 bits.

La figure 7 est un chronogramme de verrouillage en mode mains libres.

La figure 8 représente schématiquement une trame interrogation mains libres courte 20 bits.

La figure 9 est un schéma d'une trame interrogation mains libres courte 6 bits.

La figure 10 est un chronogramme anti-collision en mode mains libres.

La figure 11, enfin, est un chronogramme d'exemple de collision entre deux systèmes.

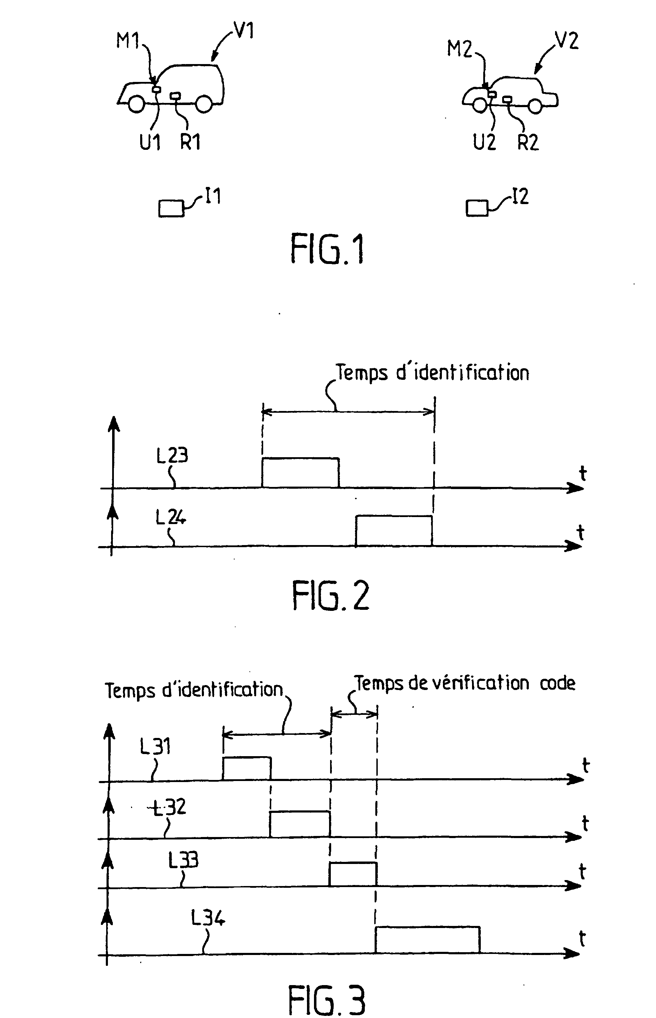

Sur la figure 1, on peut voir deux véhicules automobiles V1, V2 situés à proximité l'un de l'autre. Chaque véhicule automobile est équipé d'un système électronique de sécurité similaire qui sera décrit pour le seul véhicule V1.

Le système comprend des moyens d'identification M1 situés dans le véhicule V1 et un identifiant I1, généralement un badge avec transpondeur électromagnétique, porté par l'utilisateur. Les moyens d'identification M1 peuvent comprendre un module de contrôle U1 et un module radio R1.

Le système de commande est du type mains libres. Autrement dit, l'utilisateur porteur de l'identifiant n'a pas à manipuler l'identifiant pour les commandes. Lorsque l'utilisateur s'éloigne du véhicule, le verrouillage s'établit, en principe, automatiquement tandis que le déverrouillage se produit normalement lorsque l'utilisateur avec l' identifiant est suffisamment proche du véhicule.

Les moyens d'identification M1 procèdent à des interrogations périodiques, généralement toutes les secondes, par émission dans des créneaux de durée déterminée, par exemple de 50 ms, de signaux électromagnétiques à radiofréquence (RF) codés.

L'identifiant I1 répond à ces signaux et envoie vers les moyens M1 un signal codé permettant l'authentification de I1 et entraînant le déverrouillage du véhicule.

L'interrogation de l'identifiant I1 est illustrée sur la figure 2 où le temps est porté en abscisse, ainsi que pour les figures suivantes.

La ligne L23 illustre l'émission du module de contrôle U1 vers le module radio. La ligne L24 illustre le traitement dans l'identifiant I1, et l'émission du module radio vers l'unité U1.

Le temps d'identification est représenté par un segment ; il est de l'ordre de 50 ms. Le temps de réveil du module radio est généralement inférieur à 5 ms.

La figure 3 illustre les signaux permettant le déverrouillage du véhicule en mode mains libres, dans le cas normal où il n'y a pas de collision.

La ligne supérieure L31 représente schématiquement le signal d'interrogation mains libres du module radio R1 vers l'identifiant I1. La ligne L32 représente le code mains libres envoyé par l'identifiant au module de contrôle U1. La ligne L33 représente le traitement dans le module U1 avec collage d'un relais électromagnétique. La ligne L34 représente la commande des moteurs de verrouillage/déverrouillage de porte, pour assurer le déverrouillage.

Le temps d'interrogation de l'identifiant est représenté par un segment, comme précédemment, et correspond à environ 50 ms. Le temps de vérification code englobe le temps de traitement dans le module U1; il est de l'ordre de 5 ms et reste inférieur à 7 ms.

Le signal de code sur la ligne L31, pour l'interrogation de l'identifiant par le système, correspond à un code long, c'est-à-dire qui permet une authentification de l'identifiant I1.

Selon un premier aspect de l'invention, les modalités d'échange RF sont les suivantes dans un système V1/I1 pour réduire les risques de collision avec les signaux d'un système V2/I2 pouvant se trouver à proximité du premier système V1/I1.

V1 émet normalement, dans un créneau primaire (50 ms), un code long (30 ms) illustré sur la ligne L31 de la figure 3, permettant l'identification totale (ou authentification) de l'identifiant I1.

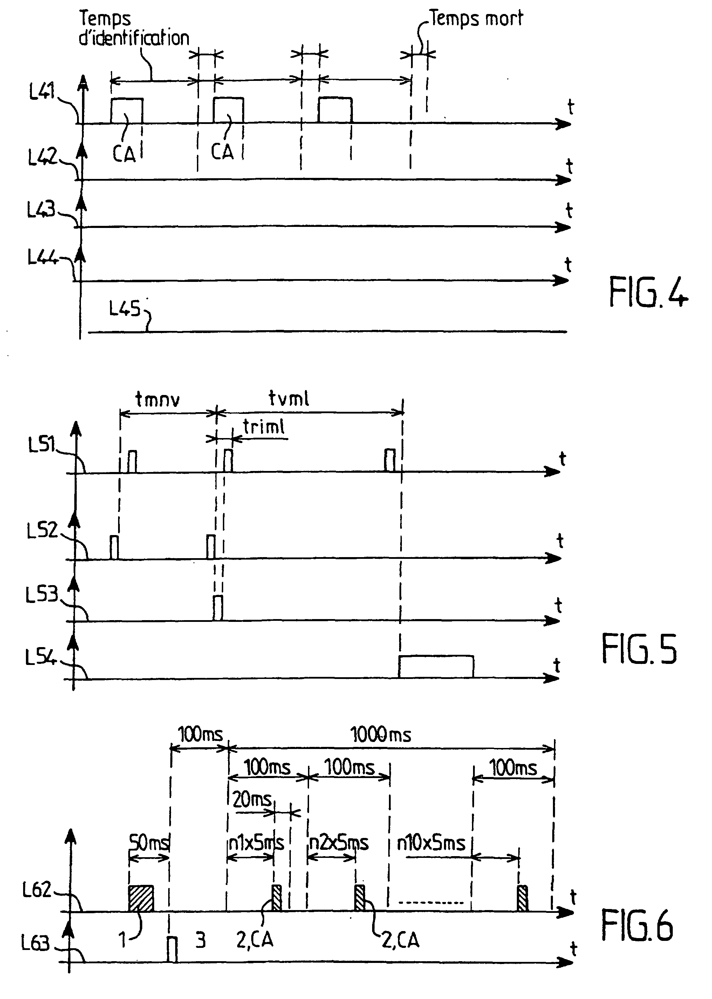

Si V1, par ses moyens M1, ne reçoit pas la réponse attendue, les moyens M1 envoient un code abrégé CA comme illustré sur la ligne supérieure L41 de la figure 4. Le code abrégé CA est envoyé dans un créneau secondaire et est répété dans un certain nombre de créneaux secondaires successifs, à l'intérieur d'une fenêtre d'interrogation d'une seconde, pour tenter d'obtenir une réponse.

L'utilisation de ce code abrégé CA diminue le risque de collision avec des signaux de systèmes voisins. L'utilisation de codes abrégés réduit le taux d'occupation de la bande de fréquence.

Le code abrégé CA est suffisant pour détecter une réponse correspondant à une présence d'identifiant I1, mais n'est pas suffisant pour authentifier l'identifiant. Cette opération est effectuée, après réception d'une réponse à un code abrégé, par émission d'un code complet par les moyens d'identification M1 du véhicule.

De préférence, le code long est découpé en n parties et le code abrégé CA est formé par la $p^{ième}$ partie avec indication de la valeur du chiffre p. Le code abrégé peut comporter un nombre de bits compris entre 2 et 30, avantageusement égal à 20.

La figure 4 illustre le cas où aucune réponse n'est fournie suite à l'émission de codes abrégés CA successifs. Aucun signal ne figure sur la ligne L42 attribuée au code mains libres émis par l'identifiant à destination du module U1. De même aucun signal n'apparaît sur la ligne L43 affectée au traitement dans U1 et au collage d'un relais. Aucun signal non plus sur la ligne L44 affectée à la commande des moteurs de déverrouillage de porte. L'état physique du véhicule illustré sur la ligne L45 reste verrouillé.

Sur la ligne L41 de la figure 4, un intervalle de temps mort (temps de traitement dans le module U1) est présent entre deux segments de temps d'identification. Le segment de temps mort a une durée d'environ 5 ms.

Selon un autre aspect de l'invention, au lieu d'envoyer un code long (30 ms en premier) puis des codes abrégés CA (10 ms ensuite) en l'absence de réponse, on opère de la manière suivante.

On fait émettre, dès le début, par les moyens d'identification M1, un code abrégé CA (10 ms) à un moment fixe dans des créneaux primaires successifs ( voir ligne L41 de la figure 4) jusqu'à obtenir une réponse et, ensuite, on envoie un code long pour identifier complètement l'identifiant I1 avant de déverrouiller.

CAS DU VERROUILLAGE

On considère maintenant le cas du verrouillage qui se produit, par exemple, lorsque l'utilisateur vient de sortir du véhicule et s'en éloigne après avoir refermé les portes.

La figure 5 est un chronogramme illustrant le verrouillage en mode mains libres selon l'état de la technique.

La ligne supérieure L51 représente les signaux d'interrogation du module U1 vers l'identifiant. La deuxième ligne L52 illustre les signaux de réponse identifiant vers le module U1. La ligne L54 illustre les signaux de commande des moteurs de verrouillage de porte.

Le segment de temps désigné par tmnv correspond au temps de maintien non verrouillé dont le maximum est par exemple de 2449 ms. Le segment tvml illustre le temps de décision de verrouillage mains libres, inférieur à 2550 ms. Le segment triml représente le temps de réponse interrogation mains libres, inférieur à 50 ms.

Dans la trame d'interrogation du module de contrôle U1 vers le module radio R1 de l'identifiant, un bit indique si la dernière réponse mains libres a été décodée par U1.

Selon l'invention, après émission d'un code long demeuré sans réponse, on raccourcit le code et on envoie un code abrégé CA (10 ms) dans des créneaux secondaires successifs contenant la partie émission et la partie réception. Ces créneaux secondaires ont avantageusement une durée de 100 ms de sorte que la fenêtre d'une seconde est divisée en dix créneaux secondaires.

Avantageusement, on positionne le début du code abrégé CA dans chaque créneau secondaire de façon aléatoire à l'intérieur du créneau secondaire comme illustré sur la figure 6.

Sur la figure 6, le découpage de la fenêtre de 1000 ms (1s) en dix créneaux secondaires successifs de 100 ms est illustré par des segments.

La ligne L62 illustre les signaux d'interrogation mains libres du module radio R1 vers l'identifiant I1. Sur cette ligne, le signal 1 correspond au code long d'interrogation du module radio R1 vers l'identifiant I1. La ligne L63 illustre le signal 3 fourni par le module radio R1 à l'unité U1 lorsque ce module radio n'a pas eu de réponse ou a obtenu un code de réponse erroné en provenance de l'identifiant. Après un nouveau signal, le module radio émet en direction de l'identifiant I1 des codes abrégés CA (ligne L62) sous forme de signaux 2, dans des créneaux secondaires successifs de 100 ms.

Le positionnement du signal 2 de code abrégé dans son créneau est aléatoire, c'est-à-dire que le début du signal 2 est retardé, par rapport au début de son créneau, d'un segment de temps variable de manière aléatoire. Sur la figure 6, les retards ont été désignés par (n1 x 5 ms)...(n10 x 5 ms). Autrement dit, la longueur de chaque retard est égale à un nombre n aléatoire, multiplié par 5 ms. Compte tenu de la durée du créneau secondaire de 100 ms, le nombre n peut être compris entre 0 et 15.

Les codes abrégés correspondant aux interrogations courtes des signaux 2 comportent avantageusement 20 bits.

Le positionnement aléatoire du code abrégé dans son créneau permet de réduire encore plus le risque de collision lorsque l'on est en présence de deux systèmes V1/I1 et V2/I2 synchrones.

De préférence, le positionnement du code abrégé (signaux 2 sur ligne L62) est fonction du code abrégé (ou du code long) lui-même pour réduire le risque de voir deux émissions de code abrégé effectuées au même moment pour deux véhicules voisins malgré la détermination aléatoire du positionnement du code dans son créneau ; en effet, si un véhicule V1 passe dans un régime d'émission de code abrégé, le véhicule voisin V2 va faire la même chose puisque, par hypothèse, il y avait préalablement collision.

Le nombre de codes abrégés envoyés successivement dans des créneaux secondaires par V1, en l'absence de réponse convenable, est déterminé en fonction du risque d'erreur accepté et du nombre total de systèmes semblables qui ont été mis en service. La probabilité totale d'une erreur d'un tel système, c'est-à-dire la probabilité de prise en compte d'une absence de réponse alors que l'identifiant I1 est au voisinage du véhicule V1, est égale au produit des probabilités propres à chaque créneau secondaire, car dans chaque créneau secondaire, il s'agit d'un événement indépendant. Ce nombre de codes abrégés est avantageusement compris entre 5 et 15, de préference égal à 10, ou voisin de 10.

Les codes abrégés successifs sont émis et, si on obtient une réponse reconnue mais insuffisante pour authentifier l'identifiant I1, on fait émettre à nouveau un code long (signal 1 de la ligne L62 de la figure 6) en vue de l'authentification ; si nécessaire on réitère le processus pendant un temps déterminé.

Lorsque deux systèmes sont synchrones, la probabilité pour que la première interrogation courte, d'une durée par exemple de 23 ms, soit en collision entre les deux systèmes est égale à : (23 ms + 23 ms)/100 ms = 46 %, en tenant compte d'un recouvrement partiel des interrogations de chaque système. Cette probabilité correspond au taux d'occupation cumulé d'un créneau secondaire de 100 ms par deux interrogations courtes. La probabilité pour qu'une première et une deuxième interrogation courte, sur deux créneaux successifs soit en collision est de 46 % x 46 % = 21 %. La probabilité pour que dix interrogations courtes successives soient en collision entre deux systèmes est de $0,46^{10} = 424.10^{-6}$.

Ce procédé permet donc de désynchroniser parmi plusieurs milliers de systèmes. Le code d'interrogation sur 20 bits permet de discriminer parmi 1 048 576 identifiants, soit $2^{20}$. Le risque de collision entre deux systèmes est de $424.10^{-6}$, pour une occupation de la bande de 23%.

Une interrogation courte sur une partie du code permet de diminuer la probabilité de collision entre deux systèmes, mais augmente la probabilité pour que deux identifiants répondent en même temps. Si l'interrogation courte est codée sur 4x6 bits, le code d'interrogation sur 4x6=24 bits permet de discriminer 16 777 216 identifiants (soit $2^{24}$). Chaque interrogation permet de discriminer 64 (soit $2^6$) identifiants différents, ce qui correspond à une probabilité de (1/64) = 1.56%.

Le temps d'une interrogation est de 17 ms. La probabilité pour que deux interrogations soient en collision est (17x2/125)= 27.2%. La probabilité de pouvoir désynchroniser les systèmes par période de 125 ms est de :

$$1-[(17x2/125)+(1/64)-[(17x2/125)x(1/64)]]=71.7\%.$$

Sur 8 périodes de 125 ms la probabilité de ne pouvoir désynchroniser est environ : $(1/3.53)^8 = 41.10^{-6}$. L'occupation de la bande est de 14%.

Avec un code sur 4x6 bits, avec 7 interrogations sur 1 seconde, la probabilité de pouvoir désynchroniser les systèmes par période de 143 ms est de 86.8%; la probabilité de ne pouvoir désynchroniser est environ $62.10^{-6}$. L'occupation de la bande est de 12%.

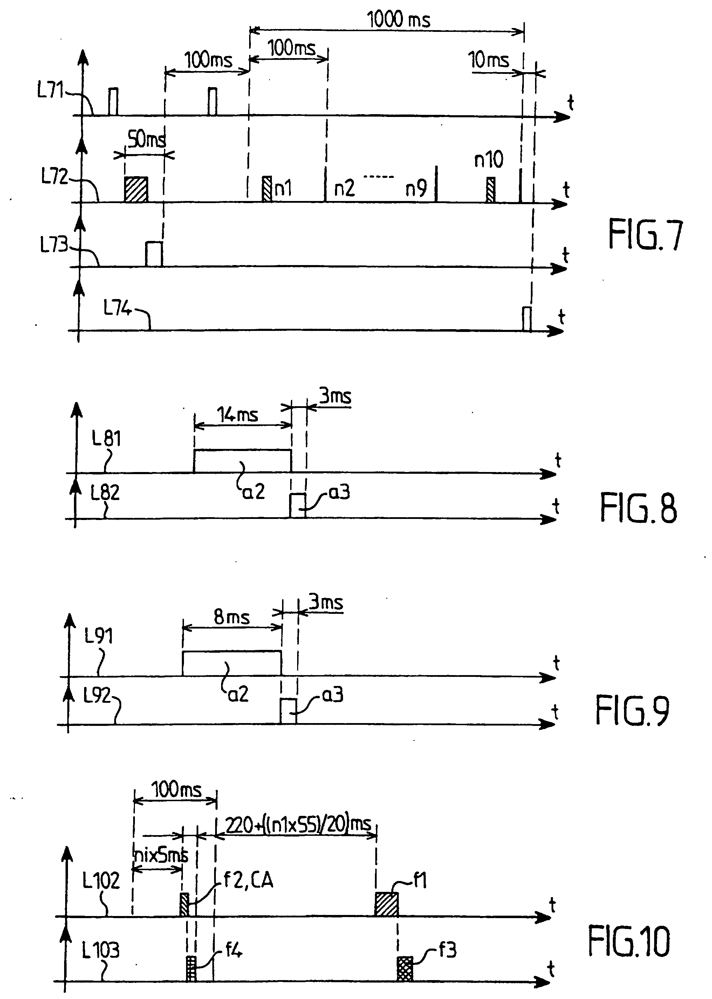

La figure 7 est un chronogramme semblable à celui de la figure 6 dans lequel toutefois sur la troisième ligne L73 un code mains libres erroné a été émis par l'identifiant I1. La ligne suivante L74 fait apparaître, après un peu plus d'une seconde, le signal de commande de verrouillage du module radio vers le module U1.

La figure 8 illustre la trame d'interrogation mains libres courte 20 bits. Sur la ligne L81, le signal d'interrogation mains libres du module radio R1 vers l'identifiant I1 apparaît constitué d'une partie a2 d'une durée de 14 ms correspondant aux 20 bits de code identifiant, plus 8 bits de synchronisation, émis à une vitesse de 2 Kbits/s. La ligne L82 illustre le signal a3 de réponse, code mains libres, de l'identifiant I1 vers le module radio R1. Ce signal a3 d'une durée de 3 ms se compose de 4 bits plus 8 bits de synchronisation émis à 4 Kbits/s.

La figure 9 illustre une autre trame interrogation mains libres courte 6 bits. Les lignes L91 et L92 correspondent aux lignes L81 et L82 de la figure 8. La différence porte sur la partie a2 de la ligne L91 qui a une durée de seulement 8 ms, au lieu de 14 ms dans le cas de la figure 8. La partie a2 de la figure 9 correspond à 6 bits de code identifiant plus 2 bits d'adressage plus 2 bits fonction plus 6 bits d'en-tête, émis à une vitesse de 2 Kbits/s. Le signal de réponse a3 est effectué sur 4 bits plus 8 bits de synchronisation à 4 Kbits/s.

Selon une autre caractéristique avantageuse de l'invention, lorsqu'un détecteur de présence du véhicule V1 est déclenché par la proximité de l'utilisateur présumé, le système procède comme expliqué ci-après. Le détecteur de présence peut être constitué par exemple par une poignée de porte qui, lorsqu'elle est manoeuvrée, déclenche le processus ; ce détecteur de présence peut également être constitué par des moyens sensibles à la proximité de l'utilisateur, sans que ce dernier ait à agir sur un élément quelconque.

Lorsqu'une telle proximité de l'utilisateur présumé est détectée par le véhicule V1, celui-ci émet un code long, par exemple sur 30 ms, pour lequel V1 devrait recevoir une réponse dans les 20ms suivantes, ce qui correspond à un créneau primaire de 50ms. Si V1 n'obtient pas de réponse au bout de 10 ms après la fin du code long, c'est-à-dire 40 ms après le début de l'émission du code long, le véhicule V1, par ses moyens M1, réémet immédiatement un code long et répète cette opération un certain nombre de fois de suite, par exemple trois fois de suite.

Par contre, si le détecteur de présence de V1 n'est pas déclenché et si le véhicule V1, après avoir émis un code long ne reçoit pas de réponse, V1 attend au moins le temps de trois créneaux longs pour laisser éventuellement passer une interrogation sur les trois interrogations successives d'un véhicule voisin. Les trois interrogations successives se font sur 50 ms, soit au total 150 ms. On va par exemple respecter une période de silence de 150 ms après un code long resté sans réponse ; ce n'est qu'après ces 150 ms de silence que le véhicule commencera l'émission de ses codes abrégés dans des créneaux secondaires.

Dans ces conditions, lorsqu'un véhicule V1 dont un détecteur de présence a été actionné, émet un code long de 30 ms et qu'il y a collision entre le code long de V1, et un code long envoyé par un autre véhicule V2 voisin, dans ce cas V1 et V2 ne reçoivent pas de réponse identifiable. V1 réinterroge immédiatement sur un code long comme indiqué précédemment tandis que V2, avant d'envoyer ses codes abrégés, respecte la période de silence pour que V1 finisse d'émettre ses trois codes longs. On réduit ainsi les risques de collision sur les codes longs répétés par V1.

Le nombre de codes longs envoyés par le véhicule, lorsqu'un détecteur de présence est actionné, n'est bien entendu pas nécessairement égal à trois. D'une manière générale, il est égal à k, k étant un nombre entier.

On considère maintenant le cas de deux véhicules V1 et V2 déverrouillés, voisins l'un de l'autre,

Chaque véhicule émet, de façon automatique, un code long de 50 ms au début d'une fenêtre de 1000 ms. On suppose qu'il y a une collision sur un code long, les deux véhicules V1 et V2 étant équipés d'un système selon l'invention.

Dans ce cas, V1 et V2 lancent un code abrégé dans des créneaux secondaires (100 ms). On suppose qu'une réponse sur un code abrégé est reçue, auquel cas cette réponse est reçue aussi bien par V1 que par V2 puisque, par hypothèse, grâce à l'invention il n'y a pas collision des codes abrégés. Dans ce cas, V1 et V2 émettent un code long (50 ms) dans un créneau primaire, pour une authentification complète de l'identifiant. Mais alors le risque est élevé d'avoir à nouveau une collision sur les codes longs.

Deux possibilités existent : ou bien les créneaux secondaires pour les deux véhicules V1, V2 sont synchrones, ou bien ils ne le sont pas.

Si les créneaux secondaires sont synchrones et si l'on fait démarrer le créneau primaire à la fin du créneau secondaire où le véhicule a reçu une réponse à un code abrégé, dans ce cas les deux codes longs vont entrer en collision s'ils démarrent au début du créneau primaire.

Pour éviter cela, le système est prévu pour positionner le début du code long en fonction de la position du code abrégé dans le créneau secondaire qui a reçu une réponse. On rappelle que le positionnement du code abrégé dans son créneau secondaire est réalisé de façon aléatoire. On prend l'écart E entre le début du créneau secondaire et le début du code abrégé situé dans ce créneau, et on le multiplie par un coefficient $\alpha$ qui est

le même pour les véhicules V1 et V2. Etant donné que l'écart E résulte d'une définition aléatoire, il est différent pour V1 et V2, de sorte que le début des codes longs des véhicules V1 et V2, émis après réception d'une réponse, se trouve décalé.

On choisit $\alpha$ très supérieur à 1 de façon que le décalage soit suffisant pour laisser une plage libre de longueur supérieure à la longueur du code long. Pour cela, on découpe le créneau secondaire de 100 ms en cent tranches de 1 ms.

Pour V1, le début du code court est situé à n1 x 5 ms après le début du créneau, tandis que pour V2, le début du code court est situé à n2 x 5 ms. En désignant par d1 et d2 les décalages des débuts de codes longs par rapport à la fin du créneau secondaire où une réponse a été obtenue, on choisira :

$$d1 = \beta + \alpha.n1.5,$$

$\beta$ étant un chiffre destiné à assurer une marge de sécurité: par exemple, $\beta$ = 220 ms.

On choisit $\alpha$ de telle sorte que l'on ait, exprimé en ms, un écart suffisant entre d1 et d2, pour y loger un code long ; par exemple $d1 + 55 \leq d2$, 55 représentant en ms la longueur du code long de 50 ms majorée de 5 ms pour la sécurité.

Il apparaît ainsi que, si les créneaux secondaires étaient initialement synchrones, le décalage pour l'émission du code long permet d'éviter la collision entre ces codes longs.

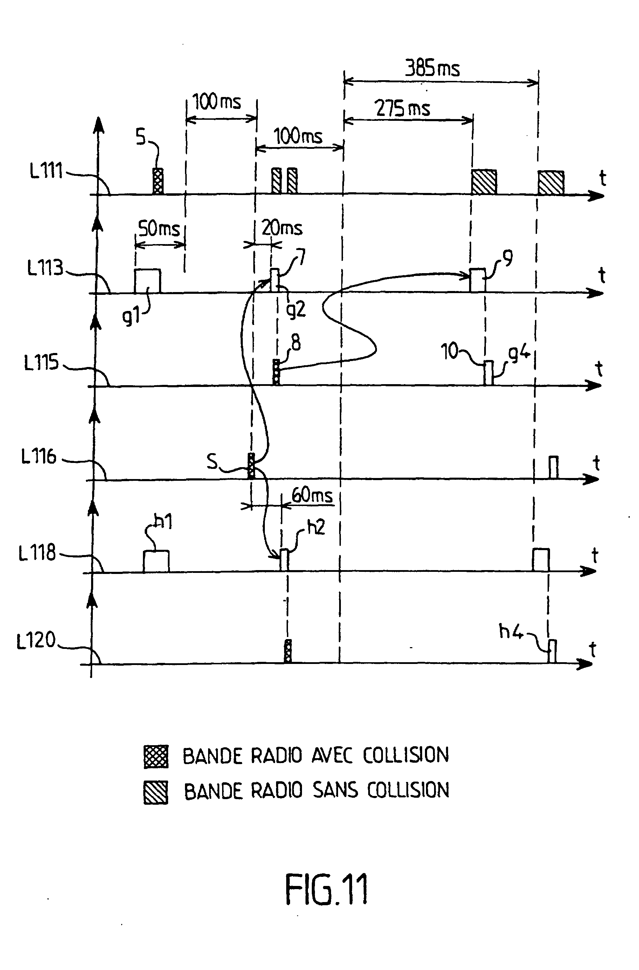

Dans le cas où les créneaux secondaires pour les deux véhicules V1 et V2 ne sont pas synchrones, on les rend synchrones pour pouvoir appliquer le procédé exposé ci-dessus, sinon on risquerait encore une collision de codes longs, dans la mesure où la désynchronisation des débuts de codes longs serait inférieure à la durée du code long. Selon l'invention, la solution adoptée (voir figure 11) consiste en ce que le premier véhicule qui a émis son code long et qui a constaté une absence de réponse, donc la présence d'une collision, va envoyer avant de passer en code abrégé un signal de synchronisation S (par exemple durée 2 ms) à un moment postérieur d'au moins 55 ms par rapport à la fin du code long pour lequel une collision a été constatée.

Avec ce signal de synchronisation, on se ramène au cas précédent et les créneaux secondaires des deux véhicules sont synchrones avec un décalage aléatoire des codes abrégés à l'intérieur de chaque créneau secondaire.

On pourrait imaginer, pour effectuer une telle synchronisation, d'utiliser des horloges qui seraient maintenues synchrones par un émetteur de top.

La figure 10 illustre un chronogramme anticollision en mode mains libres.

La ligne L102 illustre les signaux d'interrogation mains libres du module radio R1 vers l'identifiant I1. La ligne L103 illustre les signaux de code mains libres de l'identifiant I1 vers le module radio R1. Les segments séparant les limites des divers signaux sont représentés avec leur valeur chiffrée en ms.

Le signal f1, sur la ligne L102 correspond à l'interrogation mains libres cryptée du module radio R1 vers l'identifiant I1. Le signal f2, sur la ligne L102, correspond à l'interrogation mains libres 20 bits, c'est-à-dire code abrégé CA, du module radio R1 vers l'identifiant I1.

Le signal f3 de la ligne L103 correspond à une réponse mains libres cryptée de l'identifiant I1 vers le module radio. Le signal f4, sur la ligne L103, correspond à une réponse mains libres 8 bits. On voit qu'après le signal f2 correspondant à un code abrégé, qui a entraîné une réponse f4, indicatrice de la présence de l'identifiant I1, mais insuffisante pour son authentification, un code complet f1 est émis après un délai égal à 220 +[(n1 x 55)/4]ms, après la fin du créneau secondaire de 100 ms dans lequel se trouvait le signal f2 de code abrégé ayant produit la réponse. Comme déjà indiqué, n1 est un nombre aléatoire fonction du code de l'identifiant.

La réponse constituée par le signal f3 permet l'authentification de l'identifiant I1 et l'émission du signal commandant le déverrouillage.

La figure 11 est un chronogramme d'exemple de collision entre deux systèmes selon l'invention.

La ligne L111 représente l'utilisation de la bande RF. La ligne L113 représente les signaux d'interrogation mains libres du module radio R1 vers les deux identifiants I1 et I2 qui se trouvent à proximité. La ligne L115 représente les signaux de l'identifiant I1 vers les modules radios R1 et R2 ; la ligne L116 représente les signaux de synchronisation du module radio R1 vers le module radio R2 (2 octets émis à 4 Kbits, soit durée de 4 ms). La ligne L118 représente l'interrogation mains libres du module radio R2 vers les identifiants I1 et I2 ; L120 représente les signaux de l'identifiant I2 vers les modules radios R1 et R2.

g1 est le signal d'interrogation (code complet) mains libres crypté vers les identifiants I1, I2. h1 est le signal d'interrogation (code complet) mains libres crypté du module radio R2 vers les identifiants I1, I2. Ce signal h1 débute après le signal g1 mais il existe une période de recouvrement correspondant à une collision illustrée par le rectangle 5 sur la ligne 111.

Aucune réponse n'a été obtenue de la part des identifiants.

Le système de V1 étant en avance sur le système de V2, c'est V1 qui fait la synchronisation par envoi du signal S (ligne L116), de sorte que les débuts des créneaux secondaires de 100 ms pour les véhicules V1 et V2 sont synchrones.

Le code abrégé g2, ou signal 7, (ligne L113) du module radio R1 est émis 20 ms après le début de la synchronisation, tandis que le code abrégé h2 du module radio R2 est émis 60 ms après le début de la synchronisation de sorte que tout risque de collision des codes abrégés est évité. Suite à ce signal 7, l'identifiant I1 (ligne L115) émet un signal 8 qui déclenche le signal 9 (code long) du module radio R1 avec réponse cryptée 10 de l'identifiant I1 (ligne L115) pour l'authentification. Un déroulement analogue, mais légèrement retardé, a lieu entre V2 et l'identifiant I2.

Les signaux g2, h2 correspondent à une interrogation mains libres 20 bits du module radio vers l'identifiant I1, I2. Les signaux g4, h4 sont une réponse de l'identifiant en crypté. La désynchronisation des interrogations cryptées se fait dans cet exemple après une interrogation courte.

## Revendications

1. Système électronique de sécurité, pour véhicule, comprenant des moyens d'identification (M1) situés dans le véhicule, et un identifiant (I1) porté par un utilisateur, les moyens d'identification (M1) procédant à des interrogations périodiques dans des fenêtres de durée déterminée, par émission de signaux électromagnétiques à radiofréquence (RF) codés, en vue d'obtenir une réponse de l'identifiant pour son authentification, le système assurant le déverrouillage du véhicule lorsque l'authentification est réalisée, tandis que dans le cas contraire le véhicule est verrouillé,

   **caractérisé par le fait que** les moyens d'identification (M1) émettent, au cours d'une fenêtre d'interrogation, dans un créneau primaire un code complet suffisamment long pour permettre l'authentification de l'identifiant et, qu'en l'absence d'une réponse satisfaisante, les moyens d'identification (M1) émettent ensuite, dans des créneaux secondaires successifs, un code abrégé (CA) de longueur inférieure à celle du code complet, ce code abrégé étant suffisant pour établir, en cas de réponse, une présence de l'identifiant mais insuffisant pour assurer une authentification qui est ensuite réalisée par une nouvelle émission du code complet.

2. Système électronique de sécurité, pour véhicule, comprenant des moyens d'identification (M1) situés dans le véhicule, et un identifiant (I1) porté par un utilisateur, les moyens d'identification (M1) procédant à des interrogations périodiques dans des fenêtres de durée déterminée, par émission de signaux électromagnétiques à radiofréquence (RF) codés, en vue d'obtenir une réponse de l'identifiant pour son authentification, le système assurant le déverrouillage du véhicule lorsque l'authentification est réalisée, tandis que dans le cas contraire le véhicule est verrouillé,

   **caractérisé par le fait que** les moyens d'identification (M1) émettent à un moment fixe, dans des créneaux primaires successifs, un code abrégé (CA) suffisant pour établir une présence de l'identifiant mais insuffisant pour assurer une authentification complète, et en cas de réponse au code abrégé, les moyens d'identification (M1) émettent un code long dans un créneau secondaire pour l'authentification.

3. Système selon la revendication 1 ou 2, **caractérisé par le fait que** les moyens d'identification comprennent un module de contrôle (U1) propre à assurer l'émission de signaux vers l'identifiant et la réception de signaux provenant de l'identifiant.

4. Système selon l'une des revendications 1 à 3, **caractérisé par le fait que** le code long, permettant une authentification, est découpé en n parties et le code abrégé est formé par la $p^{ième}$ partie avec indication de la valeur du chiffre p.

5. Système selon la revendication 4, **caractérisé par le fait que** le code abrégé comporte un nombre de bits compris entre 2 et 30.

6. Système selon l'une des revendications précédentes, **caractérisé par le fait que** le début du code abrégé (CA), dans chaque créneau secondaire, est positionné de manière aléatoire.

7. Système selon la revendication 6, **caractérisé par le fait que** le début du code abrégé (CA) est positionné en fonction du code.

8. Système selon l'une des revendications précédentes, **caractérisé par le fait que** le nombre de codes abrégés (CA) émis dans des créneaux secondaires successifs est choisi suffisamment grand pour que la probabilité de collision entre plusieurs systèmes soit inférieure à une valeur déterminée.

9. Système selon la revendication 8, **caractérisé par** le fait le nombre de codes abrégés, par fenêtre d'interrogation, est compris entre 5 et 15, bornes incluses, en particulier égal à 10, ou voisin de 10.

10. Système selon l'une des revendications précédentes, **caractérisé par le fait que**, dans le cas où une collision s'est produite et a entraîné l'émission de codes abrégés par au moins deux systèmes entrés en collision, dans des créneaux secondaires synchrones, après réception d'une réponse à un code abrégé le système émet pour l'authentification un code long dont le début est positionné, relativement au début de son créneau primaire, en fonction de la position, dans le créneau secondaire, du code abrégé ayant entraîné une réponse.

11. Système selon la revendication 10, **caractérisé par le fait que** les décalages des débuts de code long par rapport à la fin du créneau secondaire où il y a eu une réponse sont choisis de telle sorte qu'une distance suffisante existe entre les débuts des deux codes longs pour éviter toute collision, cette distance étant de préférence supérieure à la longueur en millisecondes du créneau du code long.

12. Système selon la revendication 11, **caractérisé par le fait que** la distance exprimée en millisecondes est supérieure d'au moins 5 ms à la durée du créneau du code long.

13. Système selon l'une des revendications précédentes, **caractérisé par le fait que**, dans le cas où une collision s'est produite et a entraîné l'émission de codes abrégés par au moins deux systèmes entrés en collision, les créneaux secondaires n'étant pas synchrones, le système qui a émis un code long le premier et qui a constaté une absence de réponse, et donc l'existence d'une collision, est prévu pour envoyer un signal de synchronisation (S) avant de passer en code abrégé, ce signal de synchronisation étant envoyé après un intervalle de temps, qui suit la fin du code long dont on a constaté la mise en collision, supérieur à la durée du créneau du code long.

## Patentansprüche

1. Elektronisches Sicherheitssystem für Fahrzeuge, mit Identifizierungsmitteln (M1), die sich im Fahrzeug befinden, und einem identifizierenden Element (I1), das von einem Benutzer getragen wird, wobei die Identifizierungsmittel (M1) mit periodischen Abfragen in Fenstern mit bestimmter Dauer durch Aussenden codierter elektromagnetischer Hochfrequenzsignale (HF) arbeiten, um von dem identifzierenden Element für seine Authentifizierung eine Antwort zu erhalten, wobei das System die Entriegelung des Fahrzeugs sicherstellt, wenn die Authentifizierung erfolgt, während das Fahrzeug im entgegengesetzten Fall verriegelt wird,
**dadurch gekennzeichnet, dass** die Identifizierungsmittel (M1) in einem Abfragefenster in einer primären Sendezeit einen vollständigen Code aussenden, der ausreichend lang ist, um die Authentifizierung des identifizierenden Elements zu ermöglichen, und dass die Identifizierungsmittel (M1) beim Ausbleiben einer zufrieden stellenden Antwort anschließend in aufeinander folgenden sekundären Sendezeiten einen verkürzten Code (CA) mit einer Länge, die kleiner als jene des vollständigen Codes ist, aussenden, wobei dieser verkürzte Code ausreicht, um im Fall einer Antwort das Vorhandensein des identifizierenden Elements festzustellen, jedoch nicht ausreicht, um eine Authentifizierung sicherzustellen, die anschließend durch eine erneute Aussendung des vollständigen Codes verwirklicht wird.

2. Elektronisches Sicherheitssystem für Fahrzeuge, mit Identifizierungsmitteln (M1), die sich in dem Fahrzeug befinden, und einem identifizierenden Element (I1), das von einem Benutzer getragen wird, wobei die Identifizierungsmittel (M1) mit periodischen Abfragen in Fenstern mit bestimmter Dauer durch Aussenden codierter elektromagnetischer Hochfrequenzsignale (HF) arbeiten, um eine Antwort des identifizierenden Elements für seine Authentifizierung zu erhalten, wobei das System die Entriegelung des Fahrzeugs sicherstellt, wenn die Authentifizierung erfolgt, während das Fahrzeug im entgegengesetzten Fall verriegelt wird, **dadurch gekennzeichnet, dass** die Identifizierungsmittel (M1) zu einem festen Zeitpunkt in aufeinander folgenden primären Sendezeiten einen verkürzten Code (CA) aussenden, der ausreicht, um das Vorhandensein des identifizierenden Elements festzustellen, jedoch nicht ausreicht, um eine vollständige Authentifizierung sicherzustellen, und dass die Identifizierungsmittel (M1) im Fall einer Antwort auf den verkürzten Code in einer sekundären Sendezeit einen langen Code für die Authentifizierung aussenden.

3. System nach Anspruch 1 oder 2, **dadurch gekennzeichnet, dass** die Identifizierungsmittel ein Steuermodul (U1) umfassen, das geeignet ist, das Aussenden von Signalen zu dem identifizierenden Element und das Empfangen von Signalen, die von dem identifizierenden Element stammen, sicherzustellen.

4. System nach einem der Ansprüche 1 bis 3, **dadurch gekennzeichnet, dass** der lange Code, der eine Authentifizierung ermöglicht, in n Teile zerlegt ist und der verkürzte Code durch den p-ten Teil mit Angabe des Wertes der Ziffer p gebildet ist.

5. System nach Anspruch 4, **dadurch gekennzeichnet, dass** der verkürzte Code eine Anzahl von Bits im Bereich von 2 bis 30 umfasst.

6. System nach einem der vorhergehenden Ansprüche, **dadurch gekennzeichnet, dass** der Anfang des verkürzten Codes (CA) in jeder sekundären Sendezeit in zufälliger Weise positioniert wird.

7. System nach Anspruch 6, **dadurch gekennzeichnet, dass** der Anfang des verkürzten Codes (CA) in Abhängigkeit vom Code positioniert wird.

8. System nach einem der vorhergehenden Ansprüche, **dadurch gekennzeichnet, dass** die Anzahl verkürzter Codes (CA), die in den aufeinander folgenden sekundären Sendezeiten ausgesendet werden, ausreichend groß gewählt ist, damit die Kollisionswahrscheinlichkeit zwischen mehreren Systemen niedriger als ein bestimmter Wert ist.

**9.** System nach Anspruch 8, **dadurch gekennzeichnet, dass** die Anzahl verkürzter Codes pro Abfragefenster im Bereich von 5 bis 15 einschließlich der Grenzen liegt und insbesondere gleich 10 ist oder in der Nähe von 10 liegt.

**10.** System nach einem der vorhergehenden Ansprüche, **dadurch gekennzeichnet, dass** in dem Fall, in dem eine Kollision auftritt, die das Aussenden verkürzter Codes von wenigstens zwei an der Kollision beteiligten Systemen zur Folge gehabt hat, das System für die Authentifizierung in synchronen sekundären Sendezeiten nach dem Empfangen einer Antwort auf einen verkürzten Code einen langen Code aussendet, dessen Anfang in Bezug auf den Anfang seiner primären Sendezeit in Abhängigkeit von der Position in der sekundären Sendezeit jenes verkürzten Codes, der eine Antwort zur Folge hatte, positioniert ist.

**11.** System nach Anspruch 10, **dadurch gekennzeichnet, dass** die Verschiebungen der Anfänge des langen Codes in Bezug auf das Ende der sekundären Sendezeit, wo eine Antwort erfolgt ist, in der Weise gewählt werden, dass zwischen den Anfängen der zwei langen Codes ein ausreichender Abstand vorhanden ist, um jegliche Kollision zu vermeiden, wobei dieser Abstand vorzugsweise größer ist als die Länge in Millisekunden der Sendezeit des langen Codes.

**12.** System nach Anspruch 11, **dadurch gekennzeichnet, dass** der in Millisekunden ausgedrückte Abstand um wenigstens 5 ms größer als die Dauer der Sendezeit des langen Codes ist.

**13.** System nach einem der vorhergehenden Ansprüche, **dadurch gekennzeichnet, dass** in dem Fall, in dem eine Kollision auftritt, die das Aussenden verkürzter Codes durch wenigstens zwei an der Kollision beteiligte Systeme zur Folge gehabt hat, wobei die sekundären Sendezeiten nicht synchron sind, das System, das einen langen Code erstmals aussendet und das Fehlen einer Antwort und daher das Vorhandensein einer Kollision festgestellt hat, so beschaffen ist, dass es ein Synchronisationssignal (S) schickt, bevor es zu dem verkürzten Code übergeht, wobei dieses Synchronisationssignal nach einem Zeitintervall geschickt wird, das dem Ende jenes langen Codes folgt, für den festgestellt worden ist, dass er einer Kollision unterliegt, und das größer als die Dauer der Sendezeit des langen Codes ist.

**Claims**

**1.** An electronic security system for a vehicle, comprising identification means (M1) situated in the vehicle and an identifier (I1) carried by a user, the identification means (M1) performing periodic interrogations within windows of predetermined duration, by emission of pulsed electromagnetic signals at radio frequency (RF) for the purpose of obtaining a response from the identifier that gives authentication of the latter, the system effecting unlocking of the vehicle when the authentication is done, while in the contrary case the vehicle is locked,
**characterised by** the fact that in the course of an interrogation window the identification means (M1) emit, in a primary time slot, a complete pulse code which is long enough to permit the identifier to be authenticated, and in the absence of a satisfactory response the identification means (M1) then emit, in successive secondary time slots, an abridged pulse code (CA) the length of which is shorter than that of the complete pulse code, the said abridged pulse code being sufficient to establish a presence for the identifier in the event of a response, but insufficient to ensure authentication, which is then done by a fresh emission of the complete pulse code.

**2.** An electronic security system for a vehicle, comprising identification means (M1) situated in the vehicle and an identifier (I1) carried by a user, the identification means (M1) performing periodic interrogations' within windows of predetermined duration, by emission of pulsed electromagnetic signals at radio frequency (RF) for the purpose of obtaining a response from the identifier that gives authentication of the latter, the system effecting unlocking of the vehicle when the authentication is done, while in the contrary case the vehicle is locked,
**characterised by** the fact that the identification means (M1) emit, at a fixed moment and within successive primary time slots, an abridged pulse code (CA) which is sufficient to establish a presence of the identifier but insufficient to ensure complete authentication, and, in the event of a response to the abridged pulse code, the identification means (M1) emit a long pulse code within a secondary time slot for the purpose of authentication.

**3.** A system according to Claim 1 or Claim 2, **characterised by** the fact that the identification means comprise a control module (U1) which is adapted to ensure the emission of signals towards the identifier and the reception of signals coming from the identifier.

**4.** A system according to one of Claims 1 to 3, **characterised by** the fact that the long pulse code for permitting authentication is divided into n parts, and the abridged pulse code is formed by the $p^{th}$ part, with an indication of the value of the number p.

**5.** A system according to Claim 4, **characterised by** the fact that the abridged pulse code comprises a number of bits in the range between two and thirty.

**6.** A system according to one of the preceding Claims, **characterised by** the fact that the commencement of the abridged pulse code (CA) in each secondary time slot is positioned randomly.

**7.** A system according to Claim 6, **characterised by** the fact that the commencement of the abridged pulse code (CA) is positioned as a function of the pulse code.

**8.** A system according to one of the preceding Claims, **characterised by** the fact that the number of abridged pulse pulse codes (CA) emitted in the successive secondary time slots is selected to be large enough for the probability of collision between a plurality of systems to be below a predetermined value.

**9.** A system according to Claim 8, **characterised by** the fact that the number of abridged pulse pulse codes for each interrogation window is in the inclusive range five to fifteen, and in particular is equal or approximately equal to ten.

**10.** A system according to one of the preceding Claims, **characterised by** the fact that, in the case where a collision has occurred and has involved the emission, by at least two systems that have come into collision, of abridged pulse codes in synchronous secondary time slots, then after reception of a response to an abridged pulse code, the system emits for authentication purposes a long pulse code the commencement of which is positioned, in relation to the commencement of its primary time slot, as a function of the position in the secondary time slot of the abridged pulse code that gave rise to a response.

**11.** A system according to Claim 10, **characterised by** the fact that the offsets of the commencements of long pulse pulse codes with respect to the end of the secondary pulse code to which there has been a response are chosen in such a way that there is a sufficient distance between the commencements of the two long pulse pulse codes to avoid any collision, the said distance being preferably greater than the length in milliseconds of the time slot of the long pulse code.

**12.** A system according to Claim 11, **characterised by** the fact that the distance expressed in milliseconds is higher than the duration of the time slot of the long pulse code by at least 5ms.

**13.** A system according to one of the preceding Claims, **characterised by** the fact that, in the case where a collision has occurred and has involved the emission of abridged pulse pulse codes by at least two systems that have come into collision, the secondary time slots being unsynchronised, the system which first emitted a long pulse code and which has established absence of any response and therefore the existence of a collision, is arranged to send a synchronisation signal (S) before passing into abridged pulse code, the said synchronisation signal being transmitted after a time interval which follows the end of the long pulse code from which the fact of a collision has been established, the said time interval being greater than the duration of the time slot of the long pulse code.

M1
V1
U1
R1
M2
V2
U2
R2
I1
I2

FIG.1

Temps d'identification
L23
L24
t
t

FIG.2

Temps d'identification
Temps de vérification code
L31
L32
L33
L34
t
t
t
t

FIG.3

Temps d'identification
Temps mort
L41
CA
CA
t
L42
L43
L44
L45
FIG.4
tmnv
tvml
triml
L51
L52
L53
L54
FIG.5
100ms
1000ms
100ms
100ms
100ms
20ms
50ms
n1x5ms
n2x5ms
n10x5ms
L62
L63
1
3
2,CA
2,CA
FIG.6

1000 ms
100ms
100ms
10ms
L71
t
50ms
n10
L72
n1
n2
-----
n9
t
L73
t
FIG.7
L74
t
3ms
14ms
L81
t
a2
L82
a3
t
FIG.8
3ms
8ms
L91
t
a2
L92
a3
t
FIG.9
100ms
220+((n1x55)/20)ms
nix5ms
L102
f2,CA
f1
t
L103
f4
f3
t
FIG.10

385ms
100ms
275ms
100ms
5
L111
t
50ms
20ms
7
9
L113
g1
g2
8
10
g4
L115
L116
S
60ms
h1
h2
L118
h4
L120
BANDE RADIO AVEC COLLISION
BANDE RADIO SANS COLLISION

FIG.11